# EUROPEAN PATENT SPECIFICATION

(11) **EP 4 625 339 B1**
(45) Date of publication and mention of the grant of the patent: **25.11.2026**
(21) Application number: 24166630.4
(22) Date of filing: 27.03.2024
(51) Int. Cl.: G06T 15/04, G06T 11/40, G06T 17/05

(54) **DATA DRAPING IN REAL-TIME RENDERING**
DATENABDECKUNG IN ECHTZEITDARSTELLUNG
DRAPAGE DE DONNÉES EN RENDU EN TEMPS RÉEL

(43) Date of publication of application: 01.10.2025
(73) Proprietor: Luciad NV, 3001 Leuven (BE)
(72) Inventor: NUYDENS, Tom, 2547 Lint (BE); VERLINDEN, Peter, 2260 Westerlo (BE); BALOG, Daniel, 1785 Merchtem (BE); BELTUS, Marcel, 1120 Brussels (BE)
(74) Representative: Ipsilon Belgium

(56) References cited:
- US-A1- 2017 039 765
- US-B2- 9 183 666
- TRAPP MATTHIAS ET AL: "Real-time Screen-space Geometry Draping for 3D Digital Terrain Models", 2019 23RD INTERNATIONAL CONFERENCE INFORMATION VISUALISATION (IV), IEEE, 2 July 2019 (2019-07-02), pages 281 - 286, XP033604373, DOI: 10.1109/IV.2019.00054

## Description

### Field of the Invention

The present invention generally relates to real-time rendering of geospatial data, in particular within a web browser.

### Background of the Invention

Real-time rendering refers to the process of generating and displaying computer graphics in successive frames, which allows visualizing interactive and dynamic scenes. Real-time rendering can be applied in geospatial applications to interactively represent geospatial data enabling users to explore, analyse, and comprehend geospatial data in a responsive manner. This can for example enable users to navigate through interactive landscapes, visualize changes over time, and make informed decisions based on dynamic representations of geospatial data.

Real-time rendering of three-dimensional, 3D, geospatial data allows to accurately represent entities in the real world as 2D renders, e.g. digital twins of cities, buildings, or industrial sites. However, plenty of geospatial data is two-dimensional. Two-dimensional, 2D, geospatial data includes raster data such as satellite imagery or topographic maps, and vector data such as road networks or train tracks.

It can be desirable to visualize 2D geospatial data in addition to 3D geospatial data relating to the same geospatial area when real-time rendering, i.e. to represent 2D geospatial data within the render of 3D geospatial data. It is a challenge to enable draping of 2D geospatial data when real-time rendering without interfering with the interactivity of the real-time rendering, as the draping is typically computationally complex and costly to perform. This is particularly challenging in a browser environment due to network bandwidth limitations and limitations of the browser environment itself.

The documents of prior art US 2017/039765 A1, US 9183666 B2, and Trapp et al.: "Real-time Screen-space Geometry Draping for 3D Digital Terrain Models", 23rd IEEE International Conference on Information Visualisation (IV), July 2019, DOI: 10.1109/IV.2019.00054, are concerned with the real-time draping of a 3D Digital Terrain Model with aerial or satellite imagery.

### Summary of the Invention

It is an object of the present invention, amongst others, to solve or alleviate the above identified problems and challenges by improving the efficiency of draping two-dimensional, 2D, geospatial data on three-dimensional, 3D, geospatial data when real-time rendering a 3D scene.

According to a first aspect, this object is achieved by a computer-implemented method for draping two-dimensional, 2D, geospatial data on three-dimensional, 3D, geospatial data when real-time rendering a 3D scene in a spatial reference system to successive 2D frames; wherein the 2D geospatial data and the 3D geospatial data cover a same area on an earth ellipsoid in the spatial reference system; and wherein the spatial reference system comprises an adjustable main view camera that defines a main view according to which the 3D scene is rendered to the successive 2D frames; the computer-implemented method comprising, upon rendering a next 2D frame of the successive 2D frames according to a next main view:
- determining a draping area on the earth ellipsoid covered by the 3D geospatial data within the next main view based on a previous 2D frame rendered according to a previous main view;
- determining a position and an orientation of a draping view camera within the spatial reference system that defines a draping view including the draping area;
- rendering the 2D geospatial data on the earth ellipsoid according to the draping view, thereby obtaining a texture map;
- determining, for the 3D geospatial data within the next main view, zero-elevation coordinates on the earth ellipsoid in the spatial reference system;
- transforming the zero-elevation coordinates on the earth ellipsoid to view coordinates in a camera reference system defined by the draping view camera; and
- sampling, by a fragment shader, the texture map at the view coordinates when rendering the 3D geospatial data within the next 2D frame according to the next main view.

The 2D geospatial data may be geospatial raster data or geospatial vector data. Geospatial raster data refers to a type of geospatial data representation that uses a grid of cells to organize and store information associated to a location on the earth's surface. Each cell in a geospatial raster dataset corresponds to a specific geographic area, and the values in these cells can represent various types of information such as elevation, temperature, property rights, or any other continuous or categorical variable. Geospatial vector data refers to a type of geospatial data representation that uses points, lines, and polygons to describe geographic features and attributes located on the earth's surface, e.g. road networks or rivers.

The 2D geospatial data has no elevation and is therefore located on the surface of the earth ellipsoid. The 3D geospatial data may have an elevation with respect to the earth ellipsoid. The 2D geospatial data and the 3D geospatial data substantially cover the same area on the earth ellipsoid. As such, the 2D geospatial data is located underneath the 3D geospatial data.

A next 2D frame is rendered according to a main view defined by the position and orientation of the adjustable main view camera. The previous 2D frame has been rendered according to a previous main view defined by a previous position and orientation of the adjustable main view camera. In other words, the position and/or orientation of the adjustable main view camera may be adjusted between two successively rendered 2D frames, e.g. by user input.

The position and orientation of the adjustable main view camera may typically be chosen as to include 3D geospatial data of interest within the rendered 2D frame. As the 3D geospatial data typically has an elevation, the 2D geospatial data underneath the 3D geospatial data may not be visible within the main view, e.g. because the pitch of the main view camera is too small, and the main view camera is too close to the earth ellipsoid surface.

To address this problem, a draping view camera is defined for rendering the 2D geospatial data that is decoupled from the adjustable main view camera. The draping view camera is thus a view camera distinct from the adjustable main view camera, i.e. the draping view camera has its own position and orientation within the same spatial reference system as the adjustable main view camera.

The position and orientation of the draping view camera is determined such that the 2D geospatial data located on the earth ellipsoid underneath the 3D geospatial data within the next main view is included within the draping view. To this end, the draping area is determined based on the previous 2D frame. The draping area corresponds to a portion of the earth ellipsoid surface covered by the 3D geospatial data that will be visible within the next rendered 2D frame. In other words, the draping area is the portion of the earth ellipsoid surface that comprises the zero-elevation coordinates of the 3D geospatial data within the main view. A zero-elevation coordinate has the same spatial location in the spatial reference system as its corresponding 3D geospatial data point except that it has no elevation, i.e. it is located on the earth ellipsoid underneath the corresponding 3D geospatial data point.

The 2D geospatial data is rendered on the earth ellipsoid according to the draping view defined by the position and orientation of the draping view camera. This results in a texture map of the 2D geospatial data, i.e. a 2D frame or render representing the 2D geospatial data on the earth ellipsoid as observed from the draping camera.

Upon rendering the 3D geospatial data within the next 2D frame, this texture map is sampled by a fragment shader in the rendering pipeline at view coordinates corresponding to the zero-elevation coordinates of the 3D geospatial data. In doing so, the 2D geospatial data is visualised onto the render of the 3D geospatial data, thereby draping the 2D geospatial data over the 3D geospatial data.

Decoupling the draping view from the adjustable main view allows avoiding that some of the 3D geospatial data visible within the main view can not be draped by 2D geospatial data due to a mismatch between the position and orientation of the adjustable main view camera for rendering the 3D geospatial data and the absence of elevation of the 2D geospatial data. The computational efficiency of the draping is improved by only rendering the 2D geospatial data, i.e. generating the texture map, upon rendering the next 2D frame and by only rendering the 2D geospatial data within the draping area. In other words, only the 2D geospatial data of interest is rendered which can allow ignoring a portion of 2D geospatial data. The computational efficiency is further improved by determining the draping area based on the previous 2D frame, which is readily available in the memory of a graphics processing unit, GPU. The computer-implemented method further allows draping 2D geospatial data on 3D geospatial data without affecting the interactivity of the real-time rendering as it is computationally efficient. It is thus an advantage that draping 2D geospatial data according to the computer-implemented method can offer a seamless interactive experience for a user of real-time rendering software, e.g. geospatial applications. It is a further advantage that the rendering of the draped 2D geospatial data can be performed by most rendering methods as it poses no limitations on the used rendering method.

According to an example embodiment, determining the position and the orientation of the draping view camera may be based on a position and an orientation of the adjustable main view camera.

According to an example embodiment, determining the position of the draping view camera may comprise, if an elevation of the adjustable main view camera above the earth ellipsoid exceeds an elevation threshold, determining the position and the orientation of the draping view camera as the position and the orientation of the adjustable main view camera.

Thus, the position and orientation of the draping view camera may be determined to be the same as the position and orientation of the adjustable main view camera if the adjustable main view camera is positioned high enough with respect to the earth ellipsoid. As such, the draping view and main view are the same. As the adjustable main view camera is positioned far enough relative to the earth ellipsoid surface, the 2D geospatial data underneath the 3D geospatial data will be visible within the main view. The elevation threshold may, for example, be 1000 km above the earth ellipsoid.

According to an example embodiment, determining the position of the draping view camera comprises, if an elevation of the adjustable main view camera above the earth ellipsoid is at most equal to an elevation threshold, determining an elevation of the draping view camera above the earth ellipsoid as the elevation of the adjustable main view camera above the earth ellipsoid decreased with a lowest elevation value of the 3D geospatial data within the next main view.

Thus, the draping view camera is positioned closer to the earth ellipsoid surface relative to the adjustable main view camera if the adjustable main view camera is too close to the earth ellipsoid surface. To this end, the elevation of the draping view camera is lowered based on the 3D geospatial data within the next main view, i.e. lowered by the lowest elevation value of the 3D geospatial data within the next main view. In doing so, the 2D geospatial data underneath the 3D geospatial data within the main view can become visible in the draping view.

According to an example embodiment, the computer-implemented method may further comprise rendering the 3D geospatial data according to an orthographic top-down view thereby obtaining a top-down render of the 3D geospatial data, and storing a depth-buffer of the top-down render as an elevation map of the 3D geospatial data.

The orthographic top-down view may for example be defined by a top-down view camera oriented substantially orthogonally onto the earth ellipsoid surface, and positioned at a substantial elevation from the earth ellipsoid surface. Rendering the 3D geospatial data according to the orthographic top-down view thus results in a rendered 2D frame representing a top-down view onto the 3D geospatial data. When rendering a 2D frame, a depth-buffer or Z-buffer is established within the rendering pipeline. A depth-buffer is a two-dimensional array that stores depth information for each pixel within the rendered 2D frame, i.e. the distance from the camera along the camera's viewing direction. The Z-buffer associated with the top-down view 2D frame is therefore indicative for the variation in elevation and relief of the 3D geospatial data, i.e. the Z-buffer can be used as an elevation map, also topographic map or relief map, of the 3D geospatial data.

According to an example embodiment, the computer-implemented method may further comprise determining the lowest elevation value of the 3D geospatial data within the next main view based on the elevation map.

This allows determining the lowest elevation value within the visible 3D geospatial data efficiently and quickly, without performing complex and costly operations.

According to an example embodiment, determining the orientation of the draping view camera may comprise determining a pitch of the draping view camera such that an angle between a line of sight of the draping view camera and the earth ellipsoid is at least equal to a pitch threshold.

The pitch of a view camera may refer to the rotation of the camera around its horizontal axis, i.e. the imaginary line orthogonal to the line of sight of the camera. The pitch threshold may be determined such that the draping view camera is tilted sufficiently towards the surface of the earth ellipsoid. The pitch threshold may, for example, be around 30 degrees. In doing so, the 2D geospatial data underneath the 3D geospatial data within the main view can become visible in the draping view. This further allows avoiding that a portion of the sky is included within the draping view, which avoids wasting memory on pixels that do not comprise 2D geospatial data. The yaw and roll of the draping view camera may be substantially the same as the yaw and roll of the adjustable main view camera.

According to an example embodiment, the pitch threshold may be defined by an elevation exaggeration factor and/or an elevation range of the 3D geospatial data within the main view.

The elevation range of the 3D geospatial data is indicative for the amount of variation in the elevation values of the 3D geospatial data visible within the main view. The pitch threshold may be larger if the relief of the 3D geospatial data visible within the main view is flatter. The pitch threshold may be smaller if the relief of the 3D geospatial data visible within the main view is less flat, i.e. when there is a substantial difference between the lowest elevation value and the highest elevation value of the 3D geospatial data. The elevation exaggeration factor is a multiplication factor that allows to enhance or exaggerate the elevation of terrain when rendering, e.g. making elevation differences more pronounced in the rendered 2D frames than they would appear in reality.

According to an example embodiment, the computer-implemented method may further comprise determining the elevation range of the 3D geospatial data within the next main view based on the elevation map.

Determining the elevation range may include determining the lowest elevation value and the highest elevation value within the visible 3D geospatial data. By determining this from the elevation map, the elevation range can be determined efficiently and quickly, without performing complex and costly operations.

According to an example embodiment, the computer-implemented method may further comprise an initialization step of determining the zero-elevation coordinates of the 3D geospatial data on the earth ellipsoid before real-time rendering successive 2D frames.

Thus, the zero-elevation coordinates of the 3D geospatial data points are determined before initiating the real-time rendering, e.g. when loading the 3D geospatial data or 3D meshes. The determined zero-elevation coordinates may be saved along with the 3D geospatial data or added to the 3D geospatial data. This allows avoiding costly and complex trigonometric operations to the determine the zero-elevation coordinates when real-time rendering. This has the advantage that it avoids affecting the interactivity of the real-time rendering.

According to an example embodiment, determining the draping area on the earth ellipsoid covered by the 3D geospatial data within the next main view comprises:
- sampling 3D geospatial data points in the spatial reference system by sampling pixels in the depth buffer of the previous 2D frame;
- determining zero-elevation coordinates of the sampled 3D geospatial data points on the earth ellipsoid based on depth values in the depth buffer associated with the respective sampled pixels and based on the elevation map; and
- determining the draping area based on the zero-elevation coordinates of the sampled 3D geospatial data points.

This allows determining the draping area based on the depth information of the previous 2D frame which is readily available within the memory of the GPU, thereby improving the efficiency of the draping. Sampling the 3D geospatial data points may further be limited to sampling pixels in the top row and bottom row of the previous 2D frame, further limiting the amount of information that is fetched from the memory of the GPU.

According to an example embodiment, determining the position and the orientation of the draping view camera further comprises adjusting the position and the orientation of the draping view camera such that the zero-elevation coordinates of the sampled 3D geospatial data points are centred vertically in the draping view.

This allows ensuring that the draping area is included within the draping view, i.e. that the 2D geospatial data underneath the 3D geospatial data within the adjustable main view is included within the draping view.

According to an example embodiment, determining the position and the orientation of the draping view camera may further comprise:
- identifying a first extreme point and a second extreme point as the zero-elevation coordinates of the sampled 3D geospatial data points with the greatest distance between them according to a vertical axis of the draping camera view; and
- adjusting the orientation of the draping view camera such that a line of sight of the draping view camera extends along the median of a triangle formed by the first extreme point, the second extreme point, and the position of the draping view camera.

According to an example embodiment, determining the position and the orientation of the draping view camera may further comprise increasing a field of view angle of the draping view camera until the first extreme point and the second extreme point are included in the draping view.

According to an example embodiment, determining the position and the orientation of the draping view camera may further comprise scaling a **viewport size** of the draping view camera proportionally to the increase in the field of view angle.

This allows ensuring that the effective resolution of the draped 2D geospatial data remains as constant as possible.

According to an example embodiment, the computer-implemented method is performed within a web browser.

### Brief Description of the Drawings

Fig. 1 shows an example of a 2D frame comprising a render of a 3D scene in a spatial reference system;
Fig. 2 shows steps according to a computer-implemented method for draping 2D geospatial data when real-time rendering a 3D scene according to an embodiment;
Fig. 3 shows steps of the computer-implemented method for determining the position and orientation of the draping camera according to example embodiments;
Fig. 4 shows further steps for determining the draping area from the previous 2D frame according to example embodiments; and
Fig. 5 shows a suitable computing system enabling to implement embodiments of the computer-implemented method for draping 2D geospatial data.

### Detailed Description of Embodiment(s)

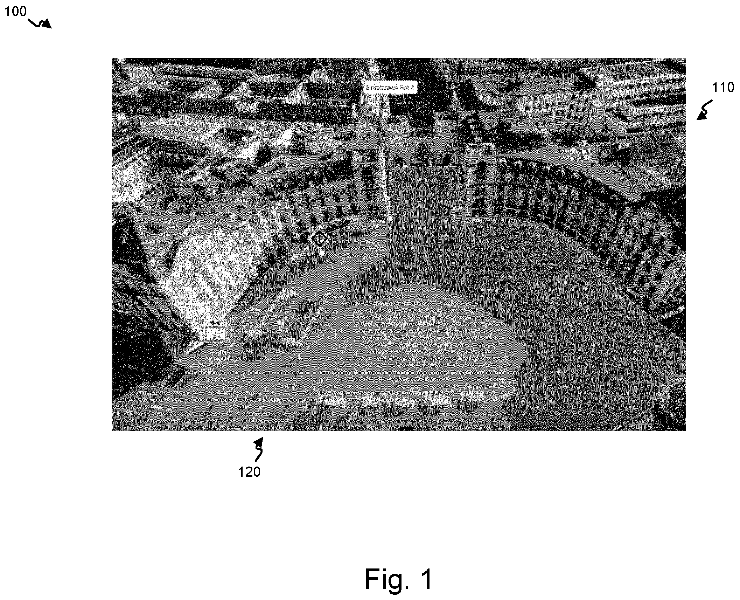

Fig. 1 shows an example of a 2D frame 100 comprising a render of a 3D scene in a spatial reference system. The 3D scene is defined by 3D geospatial data, i.e. a collection of spatial data points or vertices, edges connecting the spatial data points, and/or polygons or faces. The 3D geospatial data defines a 3D mesh that allows representing entities in the real world as 2D renders accurately within a digital environment. These objects and/or surfaces can be real-world entities such as, for example, buildings, streets, cities, airports, forests, or industrial sites. The 2D frame 100 is typically rendered according to a main view defined by a main view camera positioned within the spatial reference system. Some geospatial applications allow a user to adjust or move the main view camera within the spatial reference system, thereby allowing the user to navigate through and explore the 3D geospatial data. To this end, real-time rendering is typically implemented which renders the 3D geospatial data to successive 2D frames as the camera is moved through the 3D scene.

However, a lot of geospatial data is two-dimensional, e.g. satellite imagery, topographic maps, road networks, train tracks, or land registry information. As such, it can be desirable to visualize such 2D geospatial data within a 2D render 100 of a 3D scene relating to the same geospatial area. For example within rendered 2D frame 100, 2D geospatial data indicative for the area of a public square 120 is overlaid or draped over the render of 3D geospatial data 110. It is a challenge to allow draping of 2D geospatial data when real-time rendering without interfering with the interactivity of the real-time rendering, as the draping is typically computationally complex and costly to perform. This is particularly challenging in a browser environment due to network bandwidth limitations and limitations of the browser environment itself.

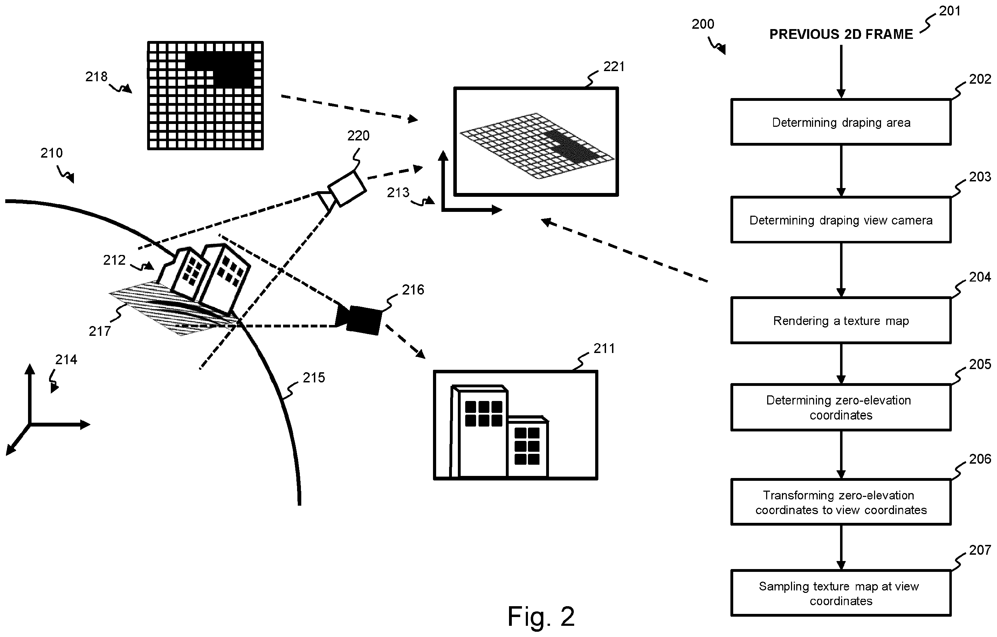

Fig. 2 shows steps 200 according to a computer-implemented method for draping 2D geospatial data 218 when real-time rendering a 3D scene 210 that addresses above identified problems and challenges by improving the computational efficiency of draping 2D data.

The 2D geospatial data 218 may be geospatial raster data (shown in Fig. 2) or geospatial vector data (not shown in Fig. 2). Geospatial raster data refers to a type of geospatial data representation that uses a grid of cells to organize and store information associated to a location on the earth's surface. Each cell in a geospatial raster dataset corresponds to a specific geographic area, and the values in these cells can represent various types of information such as elevation, temperature, property rights, or any other continuous or categorical variable. Geospatial vector data refers to a type of geospatial data representation that uses points, lines, and polygons to describe geographic features and attributes located on the earth's surface, e.g. road networks or rivers.

The 3D geospatial data 212 may comprise spatial data points or vertices characterized by a spatial location within the spatial reference system 214. The location of a 3D geospatial data point may thus be defined by coordinates according to the spatial reference system 214. The spatial reference system 214 may, for example, be a geocentric coordinate system. An earth ellipsoid 215 is used as a reference surface approximating the shape of the earth surface.

The 2D geospatial data 218 has no elevation, and therefore lies on the surface of the earth ellipsoid 215. The 3D geospatial data 212 may have an elevation with respect to the earth ellipsoid. For example, in a geocentric coordinate system 214, a 3D geospatial data point may be located at a geocentric distance from the earth's centre that is larger than the geocentric radius of the earth ellipsoid 215. The 2D geospatial data and the 3D geospatial data cover the same area on the earth ellipsoid 215. As such, the 2D geospatial data 218 is located underneath the 3D geospatial data 212 in the spatial reference system 214.

When real-time rendering a 3D scene 210, the 3D geospatial data is rendered to successive 2D frames 211 according to a main view. A successive 2D frame may be rendered at a certain frame rate or refresh rate, e.g. 60 frames per second. The main view is defined by the position and orientation of an adjustable main view camera 216. The adjustable main view camera 216 can be moved through the spatial reference system 214, e.g. by a user, thereby changing what is rendered or visible within successive 2D frames 211. In other words, the position and/or orientation of the adjustable main view camera 216 may be adjusted between two successive 2D frames 211. Thus, a previous 2D frame 201, i.e. the last rendered 2D frame of the successive 2D frames, may be rendered according to a previous main view defined by a previous position and orientation of the adjustable main view camera 216. A next 2D frame may be rendered according to a main view defined by the current position and orientation of the adjustable main view camera 216. Alternatively, the adjustable main view camera 216 may remain in the same position and orientation between two successive 2D frames 211. Steps 200 are performed upon rendering a next 2D frame of the successive 2D frames according to a next main view.

In a first step 202, the area covered by the 3D geospatial data within the next main view is determined, i.e. the draping area 217. This is achieved based on the previous 2D frame 201, i.e. the last frame rendered during the real-time rendering.

In a next step 203, a position and an orientation of a draping view camera 220 is determined within the spatial reference system 214 that defines a draping view. The position and the orientation of the draping view camera 220 is determined such that the draping area 217 is included in the draping view. The draping view camera 220 is thus a view camera distinct from the adjustable main view camera 216, i.e. the draping view camera 220 has its own position and orientation within the same spatial reference system 214.

In a following step 204, the 2D geospatial data 218 is rendered on the earth ellipsoid 215 according to the draping view of the draping view camera 220. The resulting rendered 2D frame 221 is referred to as the texture map. The texture map 221 depicts the 2D geospatial data on the earth ellipsoid 215 as observed from the draping camera. It will be apparent that rendering the texture map may be performed without displaying the resulting render 221 to a user.

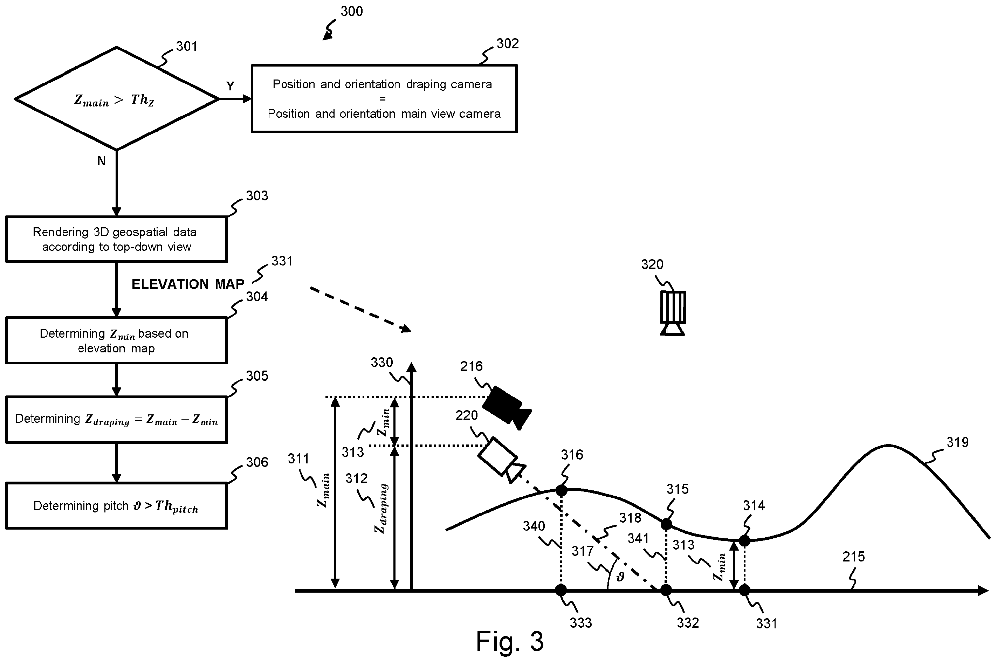

In a next step 205, zero-elevation coordinates are determined for the 3D geospatial data 212 within the next main view. A zero-elevation coordinate of a 3D geospatial data point has the same spatial location in the spatial reference system 214 as its corresponding 3D geospatial data point except that it has no elevation, i.e. it is located on the earth ellipsoid 215 underneath the corresponding 3D geospatial data point. For example, the zero-elevation coordinate of a 3D geospatial data point may represent the orthogonal projection of the 3D geospatial data point onto the earth ellipsoid 215. Fig. 3 shows a further example of zero-elevation coordinates 331, 332, 333 on the surface of the earth ellipsoid 215 of respective 3D geospatial data points 314, 315, 316 defining a 3D surface 319.

Returning to Fig. 2, in a next step 206, the zero-elevation coordinates of the 3D geospatial data are transformed to view coordinates in a camera reference system 213 defined by the draping view camera 220. In doing so, a 3D geospatial data point visible within the next main view can be associated with one or more pixels within the texture map 221.

In step 207, the texture map is sampled by the fragment shader of the rendering pipeline at the view coordinates when rendering the 3D geospatial data. As such, upon rendering a pixel within the next 2D frame 211 that depicts 3D geospatial data 212, the fragment shader samples one or more pixels of the texture map 221 that correspond to the zero-elevation coordinate of the rendered pixel of 3D geospatial data, thereby imparting the 2D geospatial data on the 3D geospatial data rendered within the next 2D frame 211, e.g. as a blended colour. In doing so, the 2D geospatial data is draped over the 3D geospatial data.

Decoupling the draping view camera 220 from the adjustable main view camera 216 allows avoiding that some of the 3D geospatial data 212 visible within the main view can not be draped by 2D geospatial data due to a mismatch between the position and orientation of the adjustable main view camera for rendering the 3D geospatial data and the absence of elevation of the 2D geospatial data. The position and orientation of the adjustable main view camera 216 may typically be chosen as to include 3D geospatial data 212 of interest within the rendered 2D frame. As the 3D geospatial data typically has an elevation above the earth ellipsoid 215 and the 2D geospatial data 218 is located on the earth ellipsoid 215 surface, the 2D geospatial data underneath the 3D geospatial data may not be visible within the main view, e.g. because the pitch of the adjustable main view camera 216 is too small and the adjustable main view camera 216 is too close to the earth ellipsoid 215 surface.

The computational efficiency of draping 2D geospatial data is improved by only rendering 204 the 2D geospatial data, i.e. generating the texture map 221, upon rendering the next 2D frame 211 and only rendering the 2D geospatial data within the draping area 217. In other words, only the 2D geospatial data of interest is rendered which can allow ignoring a portion of 2D geospatial data. The computational efficiency is further improved by determining the draping area 217 based on the previous 2D frame 201, which is readily available in the memory of a graphics processing unit, GPU. This improved computational efficiency further allows draping 2D geospatial data 218 on 3D geospatial data 212 without affecting the interactivity of the real-time rendering. It is thus an advantage that draping 2D geospatial data according to the computer-implemented method can offer a seamless and interactive experience for a user of real-time rendering software, e.g. geospatial applications. It is a further advantage that the rendering of the draped 2D geospatial data can be performed by most rendering methods as it poses no limitations on the used rendering method.

The computer-implemented method may further comprise an initialization step of determining the zero-elevation coordinates of the 3D geospatial data on the earth ellipsoid before real-time rendering successive 2D frames, i.e. before performing steps 200. Thus, the zero-elevation coordinates of the 3D geospatial data points 212 are determined before initiating the real-time rendering 200, e.g. when loading the 3D geospatial data or 3D meshes. The determined zero-elevation coordinates may be stored in memory along with the 3D geospatial data or added to the 3D geospatial data. This allows avoiding costly and complex trigonometric operations to the determine the zero-elevation coordinates when real-time rendering. This has the advantage that it avoids affecting the interactivity of the real-time rendering.

Fig. 3 shows steps 300 of the computer-implemented method for determining the position and orientation of the draping camera 220 according to example embodiments. In other words, some or all of steps 300 may be performed when performing step 203 as described in relation to Fig. 2. Fig. 3 further shows a side view or profile view of an example 3D surface 319 comprised of 3D geospatial data points 314, 315, 316. The X-axis may represent the earth ellipsoid 215 and the Y-axis may represent the elevation 330 relative to the earth ellipsoid 215. Surface 319 may, for example, be hilly terrain located on earth. The adjustable main camera 216 may be positioned and oriented such that 3D geospatial data points of interest 314, 315, 316 are clearly visible within the main view. Adjustable main camera 216 may be positioned at an elevation *Zₘₐᵢₙ* 311 above the earth ellipsoid 215.

The position and orientation of the draping view camera 220 may be determined based on the position and orientation of the adjustable main view camera 216. To this end, in a first step 301, the elevation *Zₘₐᵢₙ* 311 of the adjustable main view camera 216 is compared to an elevation threshold *Th_{Z}.* The elevation threshold *Th_{Z}* may, for example, be 1000 km above the earth ellipsoid 215. If the elevation *Zₘₐᵢₙ* 311 of the adjustable main view camera 216 exceeds the elevation threshold *Th_{Z},* the computer-implemented method proceeds to step 302. In step 302, the position and orientation of the draping view camera 220 is determined to be the same as the position and orientation of the adjustable main view camera 216. In this case, both cameras 216, 220 will be identically positioned and oriented and therefore define the same view. As the adjustable main view camera 216 is positioned high enough relative to the earth ellipsoid surface 215, i.e. higher than the elevation threshold, the 2D geospatial data underneath the 3D geospatial data 314, 315, 316 will be visible within the main view and thus also in the draping view.

If the elevation *Zₘₐᵢₙ* 311 of the adjustable main view camera 216 is at most equal to the elevation threshold *Th_{Z}* in step 301, the computer-implemented method proceeds to step 303. In step 303, the 3D geospatial data 314, 315, 316 may be rendered according to an orthographic top-down view thereby obtaining a top-down render of the 3D geospatial data 314, 315, 316. The orthographic top-down view may for example be defined by a top-down view camera 320 oriented substantially orthogonally onto the earth ellipsoid 215 surface and positioned at a substantial elevation from the earth ellipsoid 215 surface. Rendering the 3D geospatial data 314, 315, 316 according to the orthographic top-down view thus results in a rendered 2D frame representing a top-down view onto the 3D surface 319. When rendering a 2D frame, a depth-buffer or Z-buffer is established within the rendering pipeline. A depth-buffer is a two-dimensional array that stores depth information for each pixel within the rendered 2D frame, i.e. the distance from the top-down camera 320 to the 3D surface 319 along the camera's 320 viewing direction. The Z-buffer associated with the top-down view 2D frame is therefore indicative for the variation in elevation and relief of the 3D surface 319, i.e. the 3D geospatial data. The Z-buffer can thus be used as an elevation map 331, also topographic map or relief map, of the 3D geospatial data. This elevation map 331 may be kept in memory for determining the position and orientation of the draping view camera 220.

In a next step 304, the elevation map is used to determine the 3D geospatial data point 314, 315, 316 with the lowest elevation *Zₘᵢₙ* 313 above the earth ellipsoid 215. This allows determining the lowest elevation value efficiently and quickly, without performing complex and costly operations. In a following step 305, the position and orientation of the draping view camera 220 may initially be a copy of the position and orientation of the adjustable main view camera 216. The position of the draping view camera 220 may then be adjusted by lowering its elevation *Z_{draping} by* the lowest elevation value *Zₘᵢₙ* 313 of the 3D geospatial data within the next main view, i.e. *Z_{draping}* = *Zₘₐᵢₙ* - *Zₘᵢₙ*. Thus, the draping view camera 220 is positioned closer to the earth ellipsoid 215 surface relative to the adjustable main view camera 216 if the adjustable main view camera 216 is too close to the earth ellipsoid 215 surface. In doing so, the 2D geospatial data underneath the 3D geospatial data within the main view can become visible in the draping view. It will be apparent that determining the position and orientation of the draping view camera 220 may be completed here if the draping view defined by the draping view camera includes the draping area. Else, the computer-implemented method may proceed to step 306.

In a following step 306, the orientation of the draping view camera 220 may be determined by determining a pitch of the draping view camera 220 such that an angle 8 317 between a line of sight 318 of the draping view camera and the earth ellipsoid 215 is at least equal to a pitch threshold. In other words, the orientation of the draping view camera 220 may initially be copied from the adjustable main view camera 216 followed by an adjustment of its pitch based on the pitch threshold. The pitch of a view camera may refer to the rotation of the camera around its horizontal axis, i.e. the imaginary line through the centre of the camera that is orthogonal to the surface defined by the X-axis 215 and the Y-axis 330 in Fig. 3. The pitch threshold may be determined such that the draping view camera 220 is tilted sufficiently towards the surface of the earth ellipsoid 215. The pitch threshold may, for example, be around 30 degrees. In doing so, the 2D geospatial data underneath the 3D geospatial data within the main view can become visible in the draping view. This further allows avoiding that a portion of the sky is included within the draping view, which avoids wasting memory on pixels that will not comprise 2D geospatial data. The yaw and roll of the draping view camera 220 may be substantially the same as the yaw and roll of the adjustable main view camera 216.

The pitch threshold may further be defined by or chosen based on an elevation range of the 3D geospatial data 314, 315, 316 within the main view. The elevation range of the 3D geospatial data is indicative for the amount of variation in the elevation 313, 340, 341 of the 3D geospatial data 314, 315, 316 visible within the main view. For example, the elevation range may be determined as the difference between the lowest elevation value 313 and a highest elevation value 340 of the 3D geospatial data 314, 315, 316 within the main view. A large elevation range, i.e. a 3D surface 319 with substantial relief, may require a relatively smaller pitch threshold to ensure that the draping view camera 220 is oriented as to include the draping area. A smaller elevation range, i.e. a relatively flat 3D surface 319, may allow a relatively larger pitch threshold as to include the draping area. The elevation range may further be determined based on the elevation map 331. This allows determining the elevation range efficiently and quickly, without performing complex and costly operations.

Alternatively or complementary, the pitch threshold may further be defined by an elevation exaggeration factor. The elevation exaggeration factor is a multiplication factor that allows to enhance or exaggerate the elevation of terrain, e.g. 3D surface 319, when rendering. This can make elevation differences more pronounced in the rendered 2D frames than they would appear in reality. A large elevation exaggeration factor may require a relatively smaller pitch threshold to ensure that the draping view camera 220 is oriented as to include the draping area. A smaller elevation range may allow a relatively larger pitch threshold.

It will further be apparent that only step 306 for determining the orientation of the draping view camera 220 may be performed without determining or adjusting the elevation or position of the draping view camera 220 as described in relation to steps 304, 305.

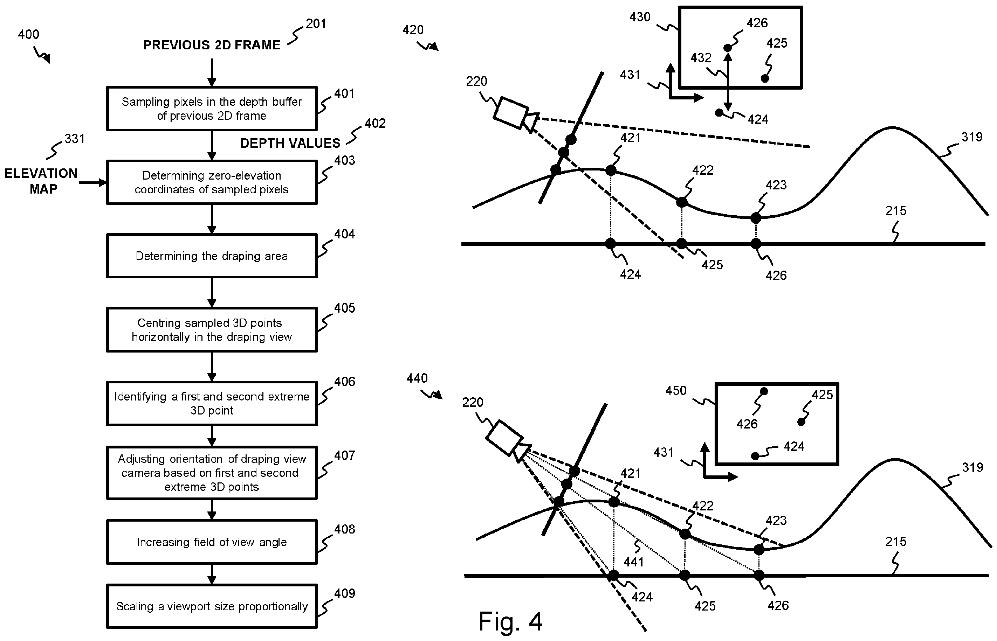

Fig. 4 shows further steps 401, 403, 404 for determining the draping area from the previous 2D frame 201 according to example embodiments. In a first step 401, pixels may be sampled from the depth-buffer associated with the previous 2D frame 201. This depth-buffer may readily be available from the GPU memory of a device performing the real-time rendering. The depth values 402 of the sampled pixels may be extracted. In doing so, 3D geospatial data points are sampled as the pixels within the previous 2D frame 201, and thus also in the depth-buffer, are a representation of the 3D geospatial data points. For example, 3D geospatial data points 421, 422, 423 may be sampled in this manner. Sampling may further be limited to sampling pixels within the top and bottom row of the depth-buffer associated with the previous 2D frame, which limits the amount of information that is fetched from memory and therefore improves efficiency.

In a next step 403, the zero-elevation values 424, 425, 426 of the sampled 3D geospatial data points 421, 422, 423 are determined based on the extracted depth values 403 and the elevation map 331. In a following step 404, the draping area on the earth ellipsoid surface 215 may be determined based on the zero-elevation coordinates 424, 425, 426 of the sampled 3D geospatial data points 421, 422, 423. This allows determining the draping area based on depth information of the previous 2D frame which is readily available within the memory of the GPU, thereby improving the efficiency of the draping. Sampling the 3D geospatial data points may further be limited to sampling pixels in the top row and bottom row of the previous 2D frame, further limiting the amount of information that is fetched from the memory of the GPU.

Fig. 4 shows further steps 405, 406, 407, 408, 409 for determining the position and orientation of the draping camera 220 according to example embodiments. These steps may, for example, be performed subsequent to one or more of the steps 300 described in relation to Fig. 3. In step 405, the position and orientation of the draping camera 220 may further be adjusted such that the zero-elevation coordinates 424, 425, 426 of the sampled 3D geospatial data points 421, 422, 423 are centred vertically in the draping view 430, 450. Vertically is to be understood as along the vertical axis 431 of the camera reference system 431 of the draping view 430, 450.

This can be achieved by, in step 406, identifying a first extreme point and a second extreme point as the zero-elevation coordinates of the sampled 3D geospatial data points with the greatest distance 432 between them according to the vertical axis 431 of the draping camera view. For example, zero-elevation coordinate 424 may be the first extreme point and zero-elevation coordinate 426 may be the second extreme point as they are separated by the largest distance 432 along the vertical axis 431. In a following step 407, the orientation of the draping view camera 220 may be adjusted such that a line of sight 441 of the draping view camera 220 extends along the median of a triangle formed by the first extreme point 424, the second extreme point 426, and the position of the draping view camera 220, as illustrated in 440. As a result, the draping view 450 may include the zero-elevation coordinates 424, 425, 426 of the sampled 3D geospatial data points 421, 422, 423, and thus may include the draping area.

If the draping area is still not completely included in the draping view, the field of view angle of the draping view camera may be increased in step 408 until the first extreme point 424 and the second extreme point 426 are included in the draping view 450. In this case, the viewport size of the draping view camera 220 may also be scaled proportionally to the increase in the field of view angle to ensure that the effective resolution of the draped 2D geospatial data remains as constant as possible.

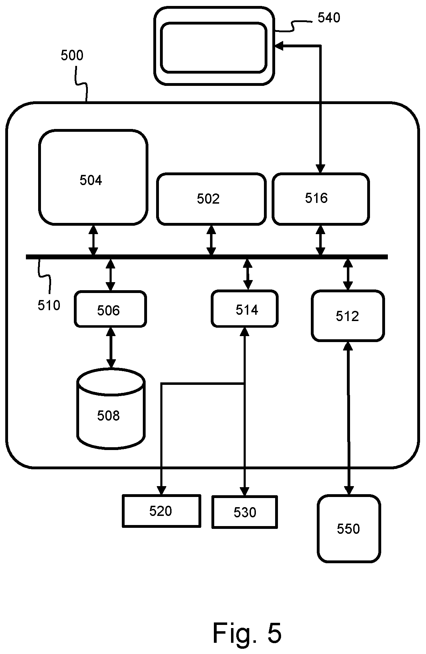

Fig. 5 shows a suitable computing system 500 enabling to implement embodiments of the computer-implemented method for draping 2D geospatial data. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems 550. The communication interface 512 of computing system 500 may be connected to such a source node or destination node by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, ROM, disk, solid state drives, flash memory cards, etc. could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for draping two-dimensional, 2D, geospatial data (218) on three-dimensional, 3D, geospatial data (212) when real-time rendering a 3D scene (210) in a spatial reference system (214) to successive 2D frames (211); wherein the 2D geospatial data and the 3D geospatial data cover a same area on an earth ellipsoid (215) in the spatial reference system; and wherein the spatial reference system comprises an adjustable main view camera (216) that defines a main view according to which the 3D scene is rendered to the successive 2D frames; the computer-implemented method comprising, upon rendering a next 2D frame of the successive 2D frames according to a next main view:
- determining (202) a draping area (217) on the earth ellipsoid covered by the 3D geospatial data within the next main view based on a previous 2D frame (202) rendered according to a previous main view;
- determining (203) a position and an orientation of a draping view camera (220) within the spatial reference system that defines a draping view including the draping area;
- rendering (204) the 2D geospatial data on the earth ellipsoid according to the draping view, thereby obtaining (204) a texture map (221);
- determining (205), for the 3D geospatial data within the next main view, zero-elevation coordinates on the earth ellipsoid in the spatial reference system;
- transforming (206) the zero-elevation coordinates on the earth ellipsoid to view coordinates in a camera reference system (213) defined by the draping view camera; and
- sampling (207), by a fragment shader, the texture map (221) at the view coordinates when rendering the 3D geospatial data within the next 2D frame according to the next main view.

2. The computer-implemented method according to claim 1, wherein determining (203) the position and the orientation of the draping view camera is based on a position and an orientation of the adjustable main view camera.

3. The computer-implemented method according to claim 2, wherein determining (203) the position of the draping view camera (220) comprises, if an elevation (311) of the adjustable main view camera above the earth ellipsoid (215) exceeds an elevation threshold, determining (304) the position and the orientation of the draping view camera as the position and the orientation of the adjustable main view camera (216).

4. The computer-implemented method according to claim 2, wherein determining (203) the position of the draping view camera (220) comprises, if an elevation (311) of the adjustable main view camera (216) above the earth ellipsoid is at most equal to an elevation threshold, determining (306) an elevation (312) of the draping view camera above the earth ellipsoid (215) as the elevation (311) of the adjustable main view camera above the earth ellipsoid decreased with a lowest elevation value (313) of the 3D geospatial data (314, 315, 316) within the next main view.

5. The computer-implemented method according to any of the preceding claims, further comprising rendering (302) the 3D geospatial data according to an orthographic top-down view (320) thereby obtaining a top-down render of the 3D geospatial data and storing a depth-buffer of the top-down render as an elevation map of the 3D geospatial data.

6. The computer-implemented method according to claim 4 and 5, further comprising determining the lowest elevation value of the 3D geospatial data within the next main view based on the elevation map (303).

7. The computer-implemented method according to any of the preceding claims, wherein determining the orientation of the draping view camera (220) comprises determining (307) a pitch of the draping view camera such that an angle (317) between a line of sight (318) of the draping view camera and the earth ellipsoid (215) is at least equal to a pitch threshold.

8. The computer-implemented method according to claim 7, wherein the pitch threshold is defined by an elevation exaggeration factor and/or an elevation range of the 3D geospatial data within the main view.

9. The computer-implemented method according to claim 5 and 8, further comprising determining the elevation range of the 3D geospatial data within the next main view based on the elevation map.

10. The computer-implemented method according to any of the preceding claims, further comprising an initialization step of determining (301) the zero-elevation coordinates of the 3D geospatial data on the earth ellipsoid before real-time rendering successive 2D frames.

11. The computer-implemented method according to claim 5, wherein determining (202) the draping area on the earth ellipsoid covered by the 3D geospatial data within the next main view comprises:
- sampling (401) 3D geospatial data points (421, 422, 423) in the spatial reference system by sampling pixels in the depth buffer of the previous 2D frame (201);
- determining (403) zero-elevation coordinates (424, 425, 426) of the sampled 3D geospatial data points on the earth ellipsoid (215) based on depth values (402) in the depth buffer associated with the respective sampled pixels and based on the elevation map (303); and
- determining (405) the draping area (217) based on the zero-elevation coordinates of the sampled 3D geospatial data points.

12. The computer-implemented method according to claim 11, wherein determining the position and the orientation of the draping view camera further comprises adjusting the position and the orientation of the draping view camera (220) such that the zero-elevation coordinates (424, 425, 426) of the sampled 3D geospatial data points are centred vertically in the draping view (450).

13. The computer-implemented method according to claim 12, further comprising:
- identifying a first extreme point and a second extreme point as the zero-elevation coordinates of the sampled 3D geospatial data points with the greatest distance between them according to a vertical axis of the draping camera view; and
- adjusting the orientation of the draping view camera such that a line of sight of the draping view camera extends along the median of a triangle formed by the first extreme point, the second extreme point, and the position of the draping view camera.

14. The computer-implemented method according to claim 13, further comprising increasing a field of view angle of the draping view camera until the first extreme point and the second extreme point are included in the draping view.

15. The computer-implemented method according to claim 14, further comprising scaling a viewport size of the draping view camera proportionally to the increase in the field of view angle.

## Patentansprüche

1. Computerimplementiertes Verfahren zum Draping georäumlicher zweidimensionaler Daten, 2D-Daten (218) auf georäumlichen dreidimensionalen Daten, 3D-Daten (212) bei der Echtzeitdarstellung einer 3D-Szene (210) in einem räumlichen Bezugssystem (214) auf aufeinanderfolgenden 2D-Frames (211); wobei die georäumlichen 2D-Daten und die georäumlichen 3D-Daten einen gleichen Bereich auf einem Erdellipsoid (215) in dem räumlichen Bezugssystem abdecken; und wobei das räumliche Bezugssystem eine einstellbare Hauptansichtskamera (216) umfasst, die eine Hauptansicht definiert, gemäß der die 3D-Szene auf den aufeinanderfolgenden 2D-Frames dargestellt wird; wobei das computerimplementierte Verfahren beim Darstellen eines nächsten 2D-Frames der aufeinanderfolgenden 2D-Frames gemäß einer nächsten Hauptansicht Folgendes umfasst:
- Bestimmen (202) eines Draping-Bereichs (217) auf dem Erdellipsoid, das durch die georäumlichen 3D-Daten innerhalb der nächsten Hauptansicht abgedeckt wird, basierend auf einem vorherigen 2D-Frame (202), der gemäß einer vorherigen Hauptansicht dargestellt wurde;
- Bestimmen (203) einer Position und einer Ausrichtung einer Draping-Ansichtskamera (220) innerhalb des räumlichen Referenzsystems, das eine Draping-Ansicht definiert, die den Draping-Bereich enthält;
- Darstellen (204) der georäumlichen 2D-Daten auf dem Erdellipsoid gemäß der Draping-Ansicht, wodurch (204) eine Texturkarte (221) erlangt wird;
- Bestimmen (205) von Null-Höhenkoordinaten auf dem Erdellipsoid in dem räumlichen Bezugssystem für die georäumlichen 3D-Daten innerhalb der nächsten Hauptansicht;
- Umwandeln (206) der Null-Höhenkoordinaten auf dem Erdellipsoid, um Koordinaten in einem Kamerareferenzsystem (213) anzuzeigen, das durch die Draping-Ansichtskamera definiert ist; und
- Abtasten (207) der Texturkarte (221) an den Ansichtskoordinaten durch einen Fragment-Shader, wenn die georäumlichen 3D-Daten innerhalb des nächsten 2D-Frames gemäß der nächsten Hauptansicht dargestellt werden.

2. Computerimplementiertes Verfahren nach Anspruch 1, wobei das Bestimmen (203) der Position und der Ausrichtung der Draping-Ansichtskamera auf einer Position und einer Ausrichtung der einstellbaren Hauptansichtskamera basiert.

3. Computerimplementiertes Verfahren nach Anspruch 2, wobei das Bestimmen (203) der Position der Draping-Ansichtskamera (220), wenn eine Höhe (311) der einstellbaren Hauptsichtkamera über dem Erdellipsoid (215) einen Höhenschwellenwert überschreitet, Bestimmen (304) der Position und der Ausrichtung der Draping-Ansichtskamera als die Position und die Ausrichtung der einstellbaren Hauptsichtkamera (216) umfasst.

4. Computerimplementiertes Verfahren nach Anspruch 2, wobei das Bestimmen (203) der Position der Draping-Ansichtskamera (220), wenn eine Höhe (311) der einstellbaren Hauptansichtskamera (216) über dem Erdellipsoid höchstens gleich einem Höhenschwellenwert ist, Bestimmen (306) einer Höhe (312) der Draping-Ansichtskamera über dem Erdellipsoid (215) als die Höhe (311) der einstellbaren Hauptansichtskamera über dem Erdellipsoid, vermindert um einen niedrigsten Höhenwert (313) der georäumlichen 3D-Daten (314, 315, 316) innerhalb der nächsten Hauptansicht umfasst.

5. Computerimplementiertes Verfahren nach einem der vorhergehenden Ansprüche, ferner umfassend Darstellen (302) der georäumlichen 3D-Daten gemäß einer orthografischen Oben-nach-unten-Ansicht (320), wodurch eine Oben-nach-unten-Darstellung der georäumlichen 3D-D erlangt wird, und Speichern eines Tiefenpuffers des Oben-nach-unten-Darstellung als eine Höhenkarte der georäumlichen 3D-Daten.

6. Computerimplementiertes Verfahren nach Anspruch 4 und 5, ferner umfassend Bestimmen des niedrigsten Höhenwerts der georäumlichen 3D-Daten innerhalb der nächsten Hauptansicht basierend auf der Höhenkarte (303).

7. Computerimplementiertes Verfahren nach einem der vorhergehenden Ansprüche, wobei das Bestimmen der Ausrichtung der Draping-Ansichtskamera (220) Bestimmen (307) einer Steigung der Draping-Ansichtskamera umfasst, sodass ein Winkel (317) zwischen einer Sichtlinie (318) der Draping-Ansichtskamera und dem Erdellipsoid (215) mindestens gleich einem Steigungsschwellenwert ist.

8. Computerimplementiertes Verfahren nach Anspruch 7, wobei der Steigungsschwellenwert durch einen Höhenüberhöhungsfaktor und/oder eine Höhenspanne der georäumlichen 3D-Daten innerhalb der Hauptansicht definiert ist.

9. Computerimplementiertes Verfahren nach Anspruch 5 und 8, ferner umfassend Bestimmen der Höhenspanne der georäumlichen 3D-Daten innerhalb der nächsten Hauptansicht basierend auf der Höhenkarte.

10. Computerimplementiertes Verfahren nach einem der vorhergehenden Ansprüche, ferner umfassend einen Initialisierungsschritt eines Bestimmens (301) der Null-Höhenkoordinaten der georäumlichen 3D-Daten auf dem Erdellipsoid vor Echtzeitdarstellung aufeinanderfolgender 2D-Frames.

11. Computerimplementiertes Verfahren nach Anspruch 5, wobei das Bestimmen (202) des Draping-Bereichs auf dem Erdellipsoid, das durch die georäumlichen 3D-Daten innerhalb der nächsten Hauptansicht abgedeckt wird, Folgendes umfasst:
- Abtasten (401) georäumlicher 3D-Datenpunkte (421, 422, 423) in dem räumlichen Bezugssystem durch Abtasten von Pixeln in dem Tiefenpuffer des vorherigen 2D-Frames (201);
- Bestimmen (403) von Null-Höhenkoordinaten (424, 425, 426) der abgetasteten georäumlichen 3D-Datenpunkte auf dem Erdellipsoid (215) basierend auf Tiefenwerten (402) in dem Tiefenpuffer, die den jeweiligen abgetasteten Pixeln zugeordnet sind, und basierend auf der Höhenkarte (303); und
- Bestimmen (405) des Draping-Bereichs (217) basierend auf den Null-Höhenkoordinaten der abgetasteten georäumlichen 3D-Datenpunkte.

12. Computerimplementiertes Verfahren nach Anspruch 11, wobei das Bestimmen der Position und der Ausrichtung der Draping-Ansichtskamera ferner Einstellen der Position und der Ausrichtung der Draping-Ansichtskamera (220) umfasst, sodass die Null-Höhenkoordinaten (424, 425, 426) der abgetasteten georäumlichen 3D-Datenpunkte vertikal in der Draping-Ansicht (450) zentriert sind.

13. Computerimplementiertes Verfahren nach Anspruch 12, ferner umfassend:
- Identifizieren eines ersten Extrempunkts und eines zweiten Extrempunkts als die Null-Höhenkoordinaten der abgetasteten georäumlichen 3D-Datenpunkte mit dem größten Abstand zwischen ihnen gemäß einer vertikalen Achse der Draping-Kameraansicht; und
- Einstellen der Ausrichtung der Draping-Ansichtskamera, sodass sich eine Sichtlinie der Draping-Ansichtskamera entlang des Medians eines Dreiecks erstreckt, das durch den ersten Extrempunkt, den zweiten Extrempunkt und die Position der Draping-Ansichtskamera ausgebildet wird.

14. Computerimplementiertes Verfahren nach Anspruch 13, ferner umfassend Erhöhen eines Sichtfeldwinkels der Draping-Ansichtskamera, bis der erste Extrempunkt und der zweite Extrempunkt in der Draping-Ansicht enthalten sind.

15. Computerimplementiertes Verfahren nach Anspruch 14, ferner umfassend Skalieren einer Viewport-Größe der Draping-Ansichtskamera proportional zu der Erhöhung des Sichtfeldwinkels.

## Revendications

1. Procédé mis en œuvre par ordinateur de drapage de données géospatiales bidimensionnelles, 2D (218) sur des données géospatiales tridimensionnelles, 3D (212) lors du rendu en temps réel d'une scène 3D (210) dans un système de référence spatiale (214) en trames 2D successives (211) ; dans lequel les données géospatiales 2D et les données géospatiales 3D couvrent une même zone sur un ellipsoïde terrestre (215) dans le système de référence spatiale ; et dans lequel le système de référence spatiale comprend une caméra de vue principale réglable (216) qui définit une vue principale selon laquelle la scène 3D est rendue en trames 2D successives ; le procédé mis en œuvre par ordinateur comprenant, lors du rendu d'une trame 2D suivante des trames 2D successives selon une vue principale suivante :
- la détermination (202) d'une zone de drapage (217) sur l'ellipsoïde terrestre couvert par les données géospatiales 3D au sein de la vue principale suivante sur la base d'une trame 2D précédente (202) rendue selon une vue principale précédente ;
- la détermination (203) d'une position et d'une orientation d'une caméra de vue de drapage (220) au sein du système de référence spatial qui définit une vue de drapage comprenant la zone de drapage ;
- le rendu (204) des données géospatiales 2D sur l'ellipsoïde terrestre selon la vue de drapage, obtenant ainsi (204) une carte de texture (221) ;
- la détermination (205), pour les données géospatiales 3D au sein de la vue principale suivante, de coordonnées d'élévation zéro sur l'ellipsoïde terrestre dans le système de référence spatiale ;
- la transformation (206) des coordonnées d'élévation zéro sur l'ellipsoïde terrestre pour voir les coordonnées dans un système de référence de caméra (213) défini par la caméra de vue de drapage ; et
- l'échantillonnage (207), par un ombrage de fragment, de la carte de texture (221) au niveau des coordonnées de vue lors du rendu des données géospatiales 3D au sein de la trame 2D suivante selon la vue principale suivante.

2. Procédé mis en œuvre par ordinateur selon la revendication 1, dans lequel la détermination (203) de la position et de l'orientation de la caméra de vue de drapage est basée sur une position et une orientation de la caméra de vue principale réglable.

3. Procédé mis en œuvre par ordinateur selon la revendication 2, dans lequel la détermination (203) de la position de la caméra de vue de drapage (220) comprend, si une élévation (311) de la caméra de vue principale réglable au-dessus de l'ellipsoïde terrestre (215) dépasse un seuil d'élévation, la détermination (304) de la position et de l'orientation de la caméra de vue de drapage comme la position et l'orientation de la caméra de vue principale réglable (216).

4. Procédé mis en œuvre par ordinateur selon la revendication 2, dans lequel la détermination (203) de la position de la caméra de vue de drapage (220) comprend, si une élévation (311) de la caméra de vue principale réglable (216) au-dessus de l'ellipsoïde terrestre est inférieure ou égale à un seuil d'élévation, la détermination (306) d'une élévation (312) de la caméra de vue de drapage au-dessus de l'ellipsoïde terrestre (215) comme étant l'élévation (311) de la caméra de vue principale réglable au-dessus de l'ellipsoïde terrestre diminuée d'une valeur d'élévation la plus basse (313) des données géospatiales 3D (314, 315, 316) au sein de la vue principale suivante.

5. Procédé mis en œuvre par ordinateur selon l'une quelconque des revendications précédentes, comprenant en outre le rendu (302) des données géospatiales 3D selon une vue orthographique de dessus (320), obtenant ainsi un rendu de dessus des données géospatiales 3D et le stockage d'un tampon de profondeur du rendu de dessus en tant que carte d'élévation des données géospatiales 3D.

6. Procédé mis en œuvre par ordinateur selon la revendication 4 et 5, comprenant en outre la détermination de la valeur d'élévation la plus basse des données géospatiales 3D au sein de la vue principale suivante sur la base de la carte d'élévation (303).

7. Procédé mis en œuvre par ordinateur selon l'une quelconque des revendications précédentes, dans lequel la détermination de l'orientation de la caméra de vue de drapage (220) comprend la détermination (307) d'un tangage de la caméra de vue de drapage de sorte qu'un angle (317) entre une ligne de visée (318) de la caméra de vue de drapage et l'ellipsoïde terrestre (215) soit au moins égal à un seuil de tangage.

8. Procédé mis en œuvre par ordinateur selon la revendication 7, dans lequel le seuil de tangage est défini par un facteur d'exagération d'élévation et/ou une plage d'élévation des données géospatiales 3D au sein de la vue principale.

9. Procédé mis en œuvre par ordinateur selon la revendication 5 et 8, comprenant en outre la détermination de la plage d'élévation des données géospatiales 3D au sein de la vue principale suivante sur la base de la carte d'élévation.

10. Procédé mis en œuvre par ordinateur selon l'une quelconque des revendications précédentes, comprenant en outre une étape d'initialisation de détermination (301) des coordonnées d'élévation zéro des données géospatiales 3D sur l'ellipsoïde terrestre avant le rendu en temps réel des trames 2D successives.

11. Procédé mis en œuvre par ordinateur selon la revendication 5, dans lequel la détermination (202) de la zone de drapage sur l'ellipsoïde terrestre couvert par les données géospatiales 3D au sein de la vue principale suivante comprend :
- l'échantillonnage (401) de points de données géospatiales 3D (421, 422, 423) dans le système de référence spatiale en échantillonnant des pixels dans le tampon de profondeur de la trame 2D précédente (201) ;
- la détermination (403) des coordonnées d'élévation zéro (424, 425, 426) des points de données géospatiales 3D échantillonnés sur l'ellipsoïde terrestre (215) sur la base des valeurs de profondeur (402) dans le tampon de profondeur associé aux pixels échantillonnés respectifs et sur la base de la carte d'élévation (303) ; et
- la détermination (405) de la zone de drapage (217) sur la base des coordonnées d'élévation zéro des points de données géospatiales 3D échantillonnés.

12. Procédé mis en œuvre par ordinateur selon la revendication 11, dans lequel la détermination de la position et de l'orientation de la caméra de vue de drapage comprend en outre l'ajustement de la position et de l'orientation de la caméra de vue de drapage (220) de sorte que les coordonnées d'élévation zéro (424, 425, 426) des points de données géospatiales 3D échantillonnés soient centrées verticalement dans la vue de drapage (450).

13. Procédé mis en œuvre par ordinateur selon la revendication 12, comprenant en outre :
- l'identification d'un premier point extrême et d'un second point extrême comme les coordonnées d'élévation zéro des points de données géospatiales 3D échantillonnés avec la plus grande distance entre eux selon un axe vertical de la vue de caméra de drapage ; et
- le réglage de l'orientation de la caméra de vue de drapage de sorte qu'une ligne de visée de la caméra de vue de drapage s'étende le long de la médiane d'un triangle formé par le premier point extrême, le second point extrême et la position de la caméra de vue de drapage.

14. Procédé mis en œuvre par ordinateur selon la revendication 13, comprenant en outre l'augmentation d'un angle de champ de vue de la caméra de vue de drapage jusqu'à ce que le premier point extrême et le second point extrême soient inclus dans la vue de drapage.

15. Procédé mis en œuvre par ordinateur selon la revendication 14, comprenant en outre la mise à l'échelle d'une taille de fenêtre de visualisation de la caméra de vue de drapage proportionnellement à l'augmentation de l'angle de champ de vision.
